# EUROPÄISCHE PATENTSCHRIFT

(11) **EP 1 000 959 B1**
(45) Veröffentlichungstag und Bekanntmachung des Hinweises auf die Patenterteilung: **16.04.2003**
(21) Anmeldenummer: 99121616.9
(22) Anmeldetag: 30.10.1999
(51) Int. Cl.: C08G 77/388, C08L 83/08, D06M 15/643, D06M 15/647

(54) **Polyetherquatfunktionelle Polysiloxane**
Polyetherquat functional polysiloxanes
Polysiloxanes à fonction polyetherquat

(30) Priorität: 14.11.1998 DE 19852621; 01.09.1999 DE 19941585
(43) Veröffentlichungstag der Anmeldung: 17.05.2000
(73) Patentinhaber: Goldschmidt AG, 45127 Essen (DE)
(72) Erfinder: Busch, Stefan, 44791 Bochum (DE); Krakenberg, Manfred, 45307 Essen (DE); Lersch, Peter, Dr., 46119 Oberhausen (DE); Stadtmüller, Stefan, Dr., 45309 Essen (DE)

(56) Entgegenhaltungen:
- DE-A- 19 651 287
- DE-C- 4 300 267
- US-A- 4 921 895
- US-A- 5 098 979

## Beschreibung

Die Erfindung betrifft neuartige polyetherquaternäre Organosiloxanylderivate, die Herstellung dieser Verbindungen und deren Verwendung in Zubereitungen zur Verbesserung der Oberflächeneigenschaften von Geweben und Fasern.

DE 37 19 086 C1 beschreibt Quatgruppen, jedoch keine Polyetheranteile. Daher sind die Verbindungen wenig hydrophil.

US 5 098 979 A und US 5 807 956 A beschreiben Siloxanpolyetherquat-Verbindungen, wobei die quaternären Ammoniumeinheiten direkt am Polyether befestigt sind.

Polyoxyalkylenmodifizierte Siliconcopolymere bewirken guten Weichgriff und Hydrophilie (US 5 811 482 A) auf hydrophoben non-woven Oberflächen (PE, PP; PE, Glas, Rayon Cellulose, Viskose). Als Anwendung werden genannt: Windeln; Schuheinlagen; Papier/Gewebetücher zur Verbesserung der Saugkraft und gleichzeitig angenehmer Griff. Allerdings sind hierbei keine Quatgruppen vorhanden.

Die Erfindung umfaßt in einer ersten Ausführungsform polyetherquatfunktionelle Polysiloxane der allgemeinen Formel I 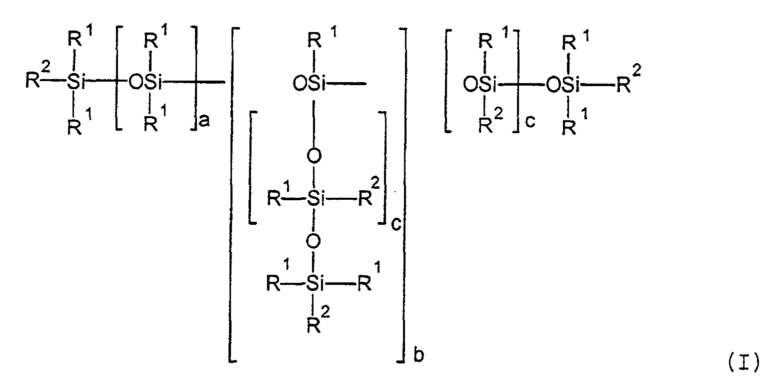 wobei
a = 5 bis 500 ist,
b = 0 bis 50,
c = 0 bis 20,
R¹ = gleiche oder verschiedene aliphatische oder aromatische Kohlenwasserstoffreste mit 1 bis 8 C-Atomen sind,
R² = R^{2A} oder R^{2B} ist, mit der Maßgabe, daß mindestens ein Rest R^{2A} und R^{2B} am Siloxangerüst enthalten ist,
R^{2A} = ein Polyetherrest der Formel II

   - (Y) [O(C₂H_{4-d}R³ _{d}O)ₑ(C_{f}H_{2f}O)_{g}X]ₙ (II)
ist, mit der Bedeutung
Y = (n + 1)-bindiger, gegebenenfalls verzweigter Kohlenwasserstoffrest,
d = 1 bis 3,
e = 1 bis 20,
f = 2 bis 4,
g = 1 bis 20,
X = Wasserstoff, ein einwertiger Kohlenwasserstoffrest oder ein Acylrest mit jeweils 1 bis 10 C-Atomen,
n = 1 bis 4,
wobei die Reste R² jeweils gleich oder verschieden sind,
R^{2B} = eine Gruppe -M-Z ist,
wobei Z ausgewählt ist aus der Gruppe bestehend aus 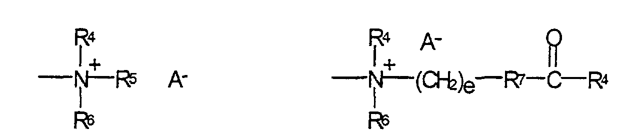 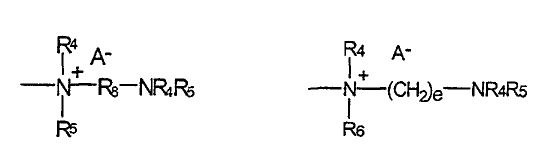 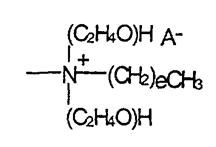 R³, R⁴, R⁵, R⁶ = jeweils unabhängig voneinander Wasserstoff oder Alkyl mit 1 bis 22 C-Atomen sind,
R⁷ = -O-; -NR⁹- ist,
R⁸ = ein (n + 1)-bindiger, gegebenenfalls verzweigter Kohlenwasserstoffrest und
R⁹ = Wasserstoff oder Alkyl mit 1 bis 6 C-Atomen ist,
A = ein Gegenion zu den positiven Ladungen an den quaternierten Stickstoffgruppen, ausgewählt aus anorganischen oder organischen Anionen physiologisch verträglicher Säuren HA ist,
M = ein zweiwertiger Rest, ausgewählt aus der Gruppe

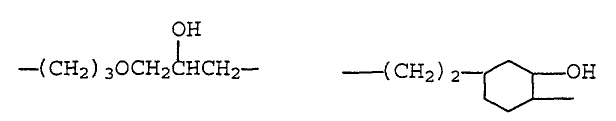

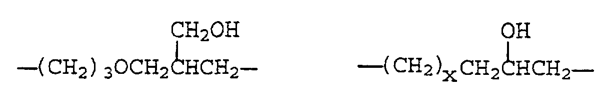

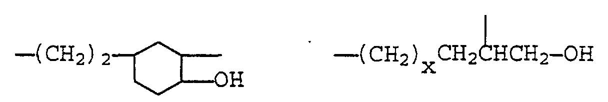

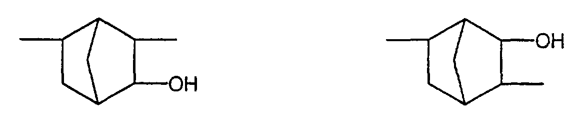

Gegenüber den Siloxanquats des Standes der Technik sind die erfindungsgemäßen Polyethersiloxanquats hydrophiler und in einer polaren Umgebung verträglich. Sie kombinieren die Vorteile der Einzelsegmente: Polyether, Quat und Siloxan.

Besonders bevorzugt im Sinne der vorliegenden Erfindung sind polyetherquatfunktionelle Siloxane der allgemeinen Formel I, wobei
a = 5 bis 300 ist,
b = 0 bis 20,
c = 0 bis 5 und
a + b +c ≥ 25.

Wenn im Sinne der vorliegenden Erfindung von Polyetherresten der allgemeinen Formel II die Rede ist, so steht die Reihenfolge der Propylenoxid- und Ethylenoxidreste vorzugsweise für blockweise gemischte Polyetherreste.

In einer weiteren bevorzugten Ausführungsform der vorliegenden Erfindung besteht das Gegenion A zu den positiven Ladungen an den quaternierten Stickstoffgruppen aus dem Anion einer physiologisch verträglichen Säure HA, die besonders bevorzugt aus Essigsäure, L-Hydroxycarbonsäuren und aromatischen Carbonsäuren ausgewählt ist.

### Ausführungsbeispiele:

### Beispiel 1:

In einem 1-1-Dreihalskolben, der mit einem Rührer, Intensivkühler, Thermometer und Tropftrichter ausgerüstet ist, wurden 0,1 Mol Dimethylaminopropylamin, 45 ml 2-Propanol vorgelegt und bei 20 °C mit 0,1 Mol Essigsäure versetzt. Es wurde 30 min bei 25 °C reagieren lassen und anschließend 0,1 Mol Epoxidpolyethersiloxan der Formel 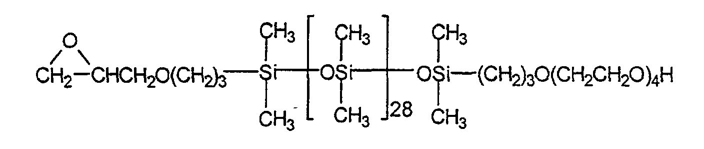 zugetropft. Zuerst wurde das Reaktionsgemisch 0,5 h bei 25 °C gerührt und anschließend nochmals ca. 5 h auf 90 °C aufgeheizt. Anschließend wurde das Lösemittel bei 90 °C und 0,2 bar abdestilliert. Das Polyethersiloxanquat fiel als farbloses bis hellgelb gefärbtes, öliges Produkt an. Das Produkt wurde nach Abkühlen auf Raumtemperatur filtriert. Gemäß ²⁹Si-NMR- und ¹³C-NMR-spektroskopischer Ergebnisse besitzt das Endprodukt nachfolgende Struktur:

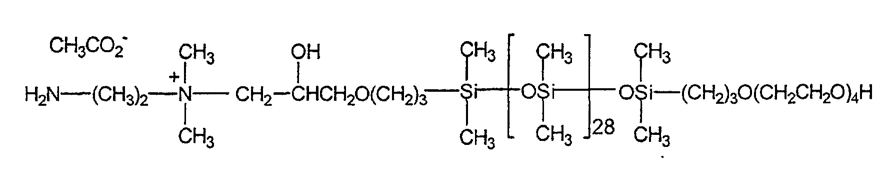

### Beispiel 2:

In einem 1-l-Dreihalskolben, der mit einem Rührer, Intensivkühler, Thermometer und Tropftrichter ausgerüstet war, wurden 0,1 Mol Dimethylaminopropylamin, 45 ml 2-Propanol vorgelegt und bei 20 °C mit 0,1 Mol Essigsäure versetzt. Es wurde 30 min bei 25 °C reagieren lassen und anschließend 0,1 Mol Epoxidpolyethersiloxan der Formel 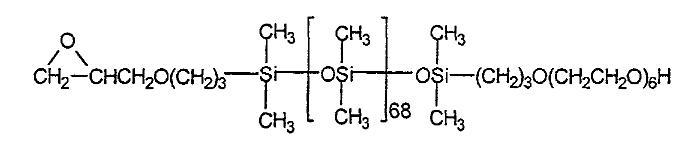 zugetropft. Zuerst wurde das Reaktionsgemisch 0,5 h bei 25 °C gerührt und anschließend nochmals ca. 5 h auf 90 °C aufgeheizt. Anschließend wurde das Lösemittel bei 90 °C und 0,2 bar abdestilliert. Das Polyethersiloxanquat fiel als farbloses bis hellgelb gefärbtes, öliges Produkt an. Das Produkt wurde nach Abkühlen auf Raumtemperatur filtriert. Gemäß ²⁹Si-NMR- und ¹³C-NMR-spektroskopischer Ergebnisse besitzt das Endprodukt nachfolgende Struktur:

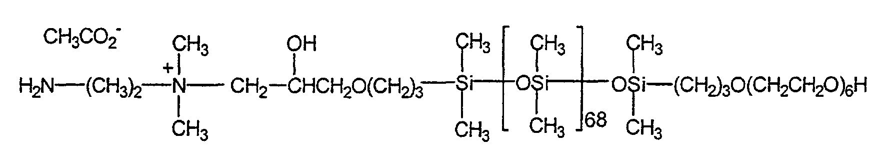

### Beispiel 3:

In einem 1-l-Dreihalskolben, der mit einem Rührer, Intensivkühler, Thermometer und Tropftrichter ausgerüstet war, wurden 0,1 Mol 3-N,N-dimethylaminopropyllaurylsäureamid, 45 ml 2-Propanol vorgelegt und bei 20 °C mit 0,1 Mol Essigsäure versetzt. Es wurde 30 min bei 25 °C reagieren lassen und anschließend 0,1 Mol Epoxidpolyethersiloxan der Formel 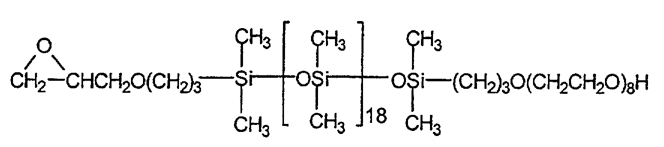 zugetropft. Reaktionsdurchführung und Aufarbeitung erfolgten analog Beispiel 1. Gemäß ²⁹Si-NMR- und ¹³C-NMRspektroskopischer Ergebnisse besitzt das Endprodukt nachfolgende Struktur:

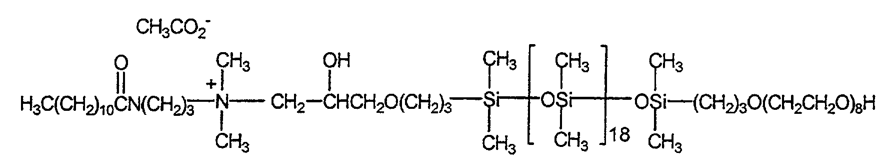

### Beispiel 4:

In einem 1-l-Dreihalskolben, der mit einem Rührer, Intensivkühler, Thermometer und Tropftrichter ausgerüstet war, wurden 0,1 Mol Dimethylaminopropylamin, 45 ml 2-Propanol vorgelegt und bei 20 °C mit 0,1 Mol Essigsäure versetzt. Es wurde 30 min bei 25 °C reagieren lassen und anschließend 0,1 Mol Epoxidpolyethersiloxan der Formel 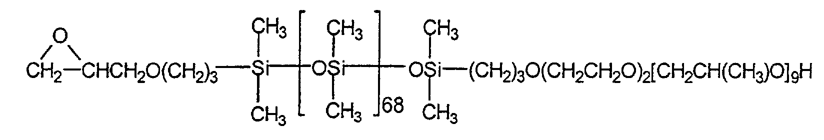 zugetropft. Reaktionsdurchführung und Aufarbeitung erfolgten analog Beispiel 1.

Gemäß ²⁹Si-NMR- und ¹³C-NMR-spektroskopischer Ergebnisse besitzt das Endprodukt nachfolgende Struktur:

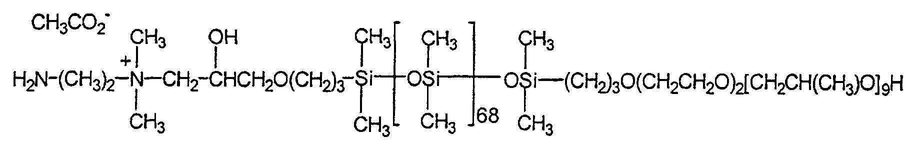

### Beispiel 5:

In einem 1-l-Dreihalskolben, der mit einem Rührer, Intensivkühler, Thermometer und Tropftrichter ausgerüstet war, wurden 0,1 Mol Tetramethyl-1,6-hexandiamin, 45 ml 2-Propanol vorgelegt und bei 20 °C mit 0,1 Mol Essigsäure versetzt. Es wurde 30 min bei 25 °C reagieren lassen und anschließend 0,1 Mol Epoxidpolyethersiloxan der Formel 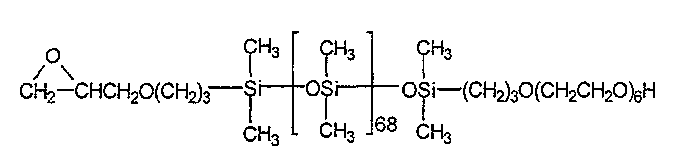 zugetropft. Reaktionsdurchführung und Aufarbeitung erfolgten analog Beispiel 1. Gemäß ²⁹Si-NMR- und ¹³C-NMRspektroskopischer Ergebnisse besitzt das Endprodukt nachfolgende Struktur:

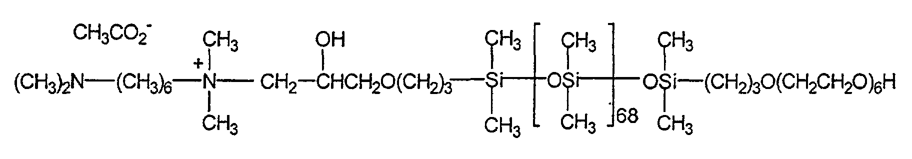

### Beispiel 6:

In einem 1-l-Dreihalskolben, der mit einem Rührer, Intensivkühler, Thermometer und Tropftrichter ausgerüstet war, wurden 0,1 Mol Poly(10)oxyethyleneoctadecylamin, 45 ml 2-Propanol vorgelegt und bei 20 °C mit 0,1 Mol Essigsäure versetzt. Es wurde 30 min bei 25 °C reagieren lassen und anschließend 0,1 Mol Epoxidpolyethersiloxan der Formel 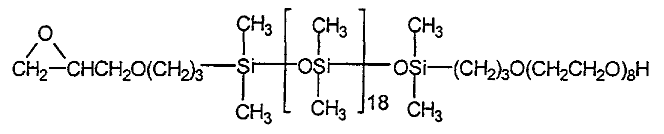 zugetropft. Reaktionsdurchführung und Aufarbeitung erfolgten analog Beispiel 1. Gemäß ²⁹Si-NMR- und ¹³C-NMRspektroskopischer Ergebnisse besitzt das Endprodukt nachfolgende Struktur:

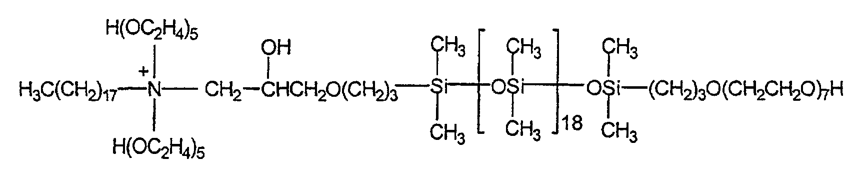

Die erfindungsgemäßen Verbindungen besitzen einen guten Weichgriff und geringe Vergilbungsneigung und ermöglichen die permanente Ausrüstung von Substraten (Baumwolle, Polyester, Vliesen, Non-wovens, Leder).

Zur Prüfung der Hydrophilie der erfindungsgemäßen Verbindungen sowie eines mit Ammoniumgruppen funktionalisierten Siloxans und eines mit Polyalkoxygruppen funktionalisierten Siloxans wurden je ein Baumwollgewebe mit einer 1 Gew.-% isopropanolischen Lösung der Aktivsubstanz behandelt und über ein Foulard abgequetscht (Belastung 30 kg). Anschließend wurde 3 Minuten bei 150 °C fixiert. Es resultierte ein sehr weicher, angenehmer Griff des mit den erfindungsgemäßen Verbindungen ausgerüsteten textilen Substrates.

Zur Prüfung der Hydrophilie wurde der TEGEWA-Tropfentest (Melliand Textilberichte 68, 581 ff. (1987) angewandt. Das ausgerüstete Gewebe wurde auf eine Spannvorrichtung horizontal aufgespannt, ohne daß es mit der Unterlage in Berührung kam. Aus einer Fallhöhe von 40 mm wurde ein Wassertropfen von 0,050 ml ± 10 % auf das Gewebe aufgetropft. Sobald der Tropfen auf das Prüfmaterial traf, wurden die Zeitmessungen begonnen. Die Zeitmessung wurde gestoppt, wenn der Tropfen vollständig in das Gewebe eingedrungen und der Glanz verschwunden war, oder länger als 300 Sekunden benötigte, in das Prüfmaterial einzudringen. In diesem Fall wurde die Messung abgebrochen und der Wert ">300 sec" gesetzt.

| Produkt | Hydrophiliewerte auf Baumwollgewebe nach Applikation [sec] |
|---|---|
| Unbehandelt | 2 |
| 1 | 70 |
| 2 | 90 |
| 3 | 50 |
| 4 | >300 |
| 5 | 140 |
| 6 | 50 |

## Patentansprüche

1. Polyetherquatfunktionelle Polysiloxane der allgemeinen Formel I 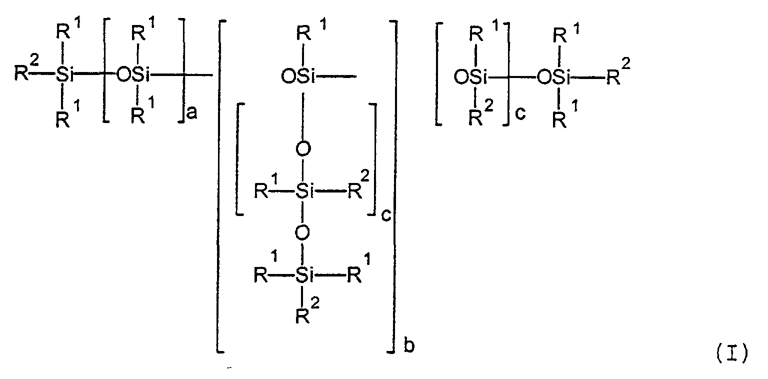 wobei
a = 5 bis 500 ist,
b = 0 bis 50,
c = 0 bis 20,
R¹ = gleiche oder verschiedene aliphatische oder aromatische Kohlenwasserstoffreste mit 1 bis 8 C-Atomen sind,
R² = R^{2A} oder R^{2B} ist, mit der Maßgabe, daß mindestens ein Rest R^{2A} und R^{2B} am Siloxangerüst enthalten ist,
R^{2A} = ein Polyetherrest der Formel II
- (Y) [O(C₂H_{4-d}R³ _{d}O)ₑ(C_{f}H_{2f}O)_{g}X]ₙ (II) (II)
ist, mit der Bedeutung
Y = (n + 1)-bindiger, gegebenenfalls verzweigter Kohlenwasserstoffrest,
d = 1 bis 3,
e = 1 bis 20,
f = 2 bis 4,
g = 1 bis 20,
X = Wasserstoff, ein einwertiger Kohlenwasserstoffrest oder ein Acylrest mit jeweils 1 bis 10 C-Atomen,
n = 1 bis 4,
wobei die Reste R² jeweils gleich oder verschieden sind,
R^{2B} = eine Gruppe -M-Z ist,
wobei Z ausgewählt ist aus der Gruppe bestehend aus 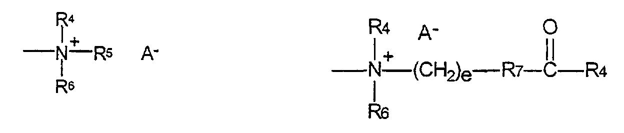 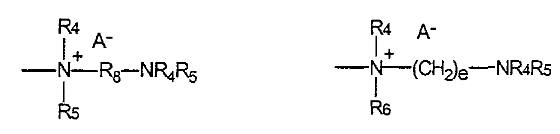 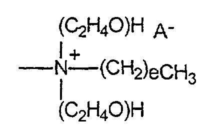
R³, R⁴, R⁵, R⁶ = jeweils unabhängig voneinander Wasserstoff oder Alkyl mit 1 bis 22 C-Atomen sind,
R⁷ = -O-; -NR⁹- ist,
R⁸ = ein (n + 1)-bindiger, gegebenenfalls verzweigter Kohlenwasserstoffrest und
R⁹ = Wasserstoff oder Alkyl mit 1 bis 6 C-Atomen ist,
A = ein Gegenion zu den positiven Ladungen an den quaternierten Stickstoffgruppen, ausgewählt aus anorganischen oder organischen Anionen physiologisch verträglicher Säure HA ist,
M = ein zweiwertiger Rest, ausgewählt aus der Gruppe

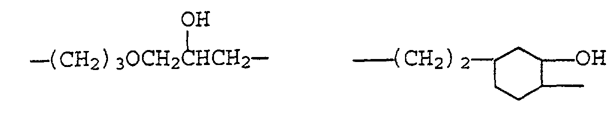

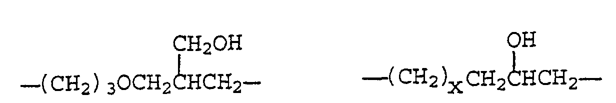

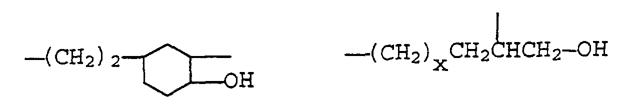

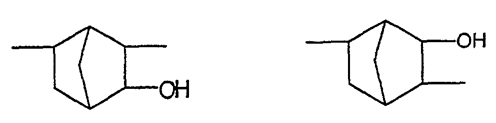

2. Polyetherquatfunktionelle Polysiloxane nach Anspruch 1, **dadurch gekennzeichnet, daß**
a = 5 bis 300 ist,
b = 0 bis 20,
c = 0 bis 5 und,
a + b +c ≥ 25 sind.

3. Polyetherquatfunktionelle Polysiloxane nach Anspruch 1, **dadurch gekennzeichnet, daß** der Polyetherrest der allgemeinen Formel II für blockweise gemischte Polyetherreste steht.

4. Polyetherquatfunktionelle Polysiloxane nach einem der Ansprüche 1 bis 3, **dadurch gekennzeichnet, daß** die physiologisch verträgliche Säure HA ausgewählt ist aus Essigsäure, L-Hydroxycarbonsäuren und aromatischen Carbonsäuren.

## Claims

1. Polysiloxanes having polyether quat functions, of the general formula I 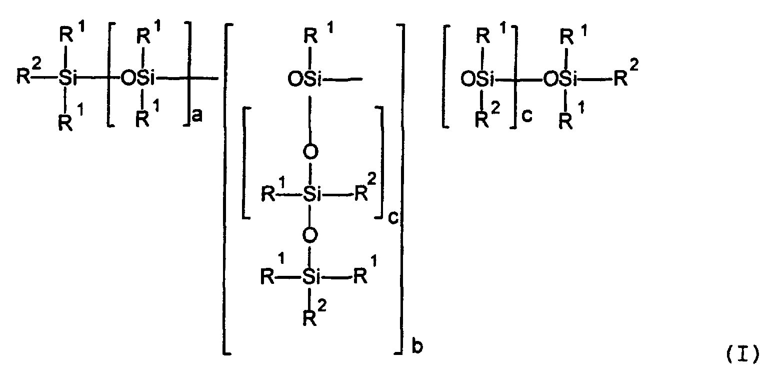 where
a = from 5 to 500,
b - from 0 to 50,
c = from 0 to 20,
R¹ = identical or different aliphatic or aromatic carbon radicals of 1 to 8 carbon atoms,
R² = R^{2A} or R^{2B}, with the proviso that there is at least one radical R^{2A} and R^{2B} on the siloxane framework,
R^{2A} = a polyether radical of the formula II
- (Y) [O(C₂H_{4-d}R³ _{d}O)ₑ(C_{f}H_{2f}O)_{g}X]ₙ (II)
where
Y = an (n + 1)-valent, optionally branched hydrocarbon radical,
d = from 1 to 3,
e = from 1 to 20,
f = from 2 to 4,
g = from 1 to 20,
X = hydrogen, or a monovalent hydrocarbon radical or an acyl radical each of 1 to 10 carbon atoms,
n = from 1 to 4,
the radicals R² being identical or different in each case,
R^{2B} = a group -M-Z
where Z is selected from the group consisting of 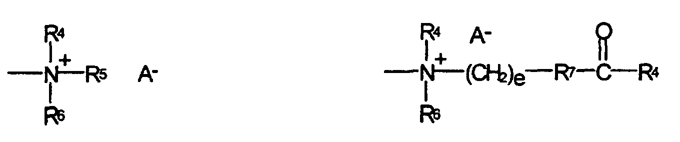 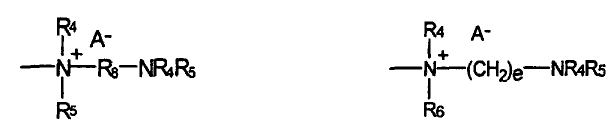 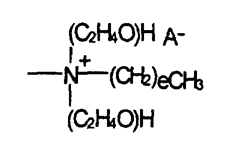 R³, R⁴, R⁵, R⁶ = in each case independently of one another, hydrogen or alkyl of 1 to 22 carbon atoms,
R⁷ = -O-; -NR⁹-,
R⁸ = an (n + 1)-valent, optionally branched hydrocarbon radical, and
R⁹ = hydrogen or alkyl of 1 to 6 carbon atoms,
A = a counterion to the positive charges on the quaternized nitrogen groups, selected from organic or inorganic anions of physiologically compatible acids HA,
M = a divalent radical selected from the group consisting of

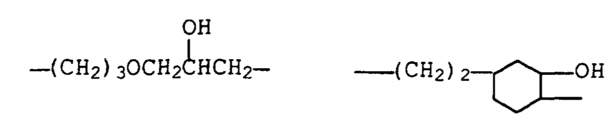

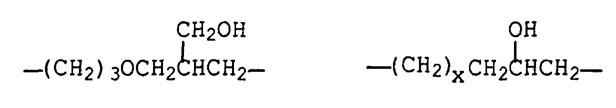

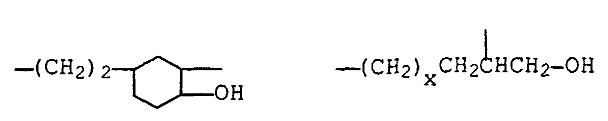

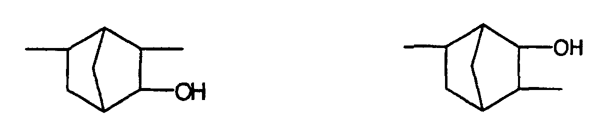

2. Polysiloxanes according to Claim 1, **characterized in that**
a = from 5 to 300,
b = from 0 to 20,
c = from 0 to 5, and
a + b + c **≥** 25.

3. Polysiloxanes according to Claim 1, **characterized in that** the polyether radical of general formula II represents polyether radicals in blockwise mixture.

4. Polysiloxanes according to any one of Claims 1 to 3, **characterized in that** the physiologically compatible acid HA is selected from acetic acid, L-hydroxycarboxylic acids, and aromatic carboxylic acids.

## Revendications

1. Polysiloxanes à fonction polyéther quaternaire de formule générale I 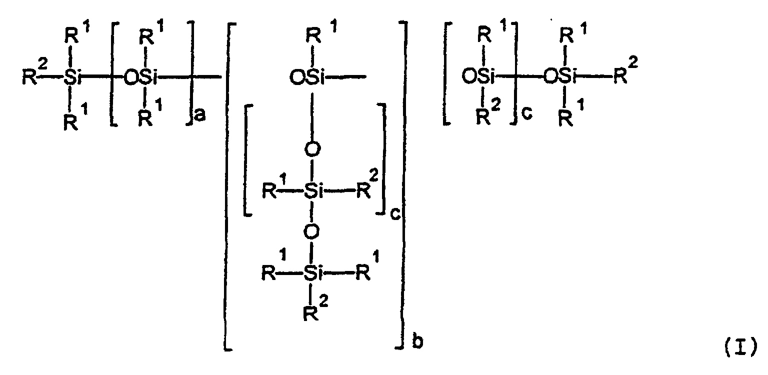 dans laquelle
a va de 5 à 500,
b va de 0 à 50,
R¹ sont des radicaux hydrocarbonés aliphatiques ou aromatiques identiques ou différents ayant de 1 à 8 atomes de carbone,
R² est R^{2A} ou R^{2B}, étant entendu qu'au moins un radical R^{2A} ou R^{2B} est contenu sur le squelette siloxane,
R^{2A} est un radical polyéther de formule II
- (Y) [O(C₂H_{4-d}R³ _{d}O)ₑ(C_{f}H_{2f}O)_{g}X]ₙ (II)
dans laquelle
Y représente un radical hydrocarboné (n + 1)-valent, éventuellement ramifié,
d = 1 à 3
e = 1 à 20,
f = 2 à 4,
g = 1 à 20,
X = un atome d'hydrogène, un radical hydrocarboné monovalent ou un radical acyle ayant chacun de 1 à 10 atomes de carbone,
n = 1 à 4,
les radicaux R² étant identiques ou différents,
R^{2B} est un groupe -M-Z,
Z étant choisi dans l'ensemble constitué par 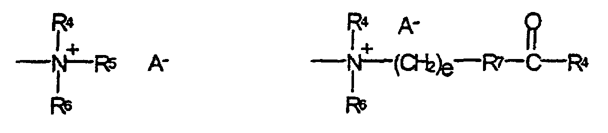 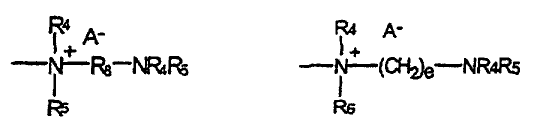 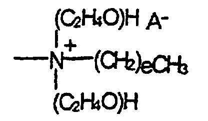
R³, R⁴, R⁵, R⁶ représentent chacun, indépendamment les uns des autres, un atome d'hydrogène ou un groupe alkyle ayant de 1 à 22 atomes de carbone,
R⁷ est -O-, -NR⁹-,
R⁸ est un radical hydrocarboné (n + 1)-valent, éventuellement ramifié et
R⁹ est un atome d'hydrogène ou un groupe alkyle ayant de 1 à 6 atomes de carbone,
A est un ion opposé aux charges positives sur les groupes azotés quaternaires, choisi parmi des anions organiques ou minéraux d'un acide physiologiquement acceptable HA,
M = un radical divalent choisi dans l'ensemble

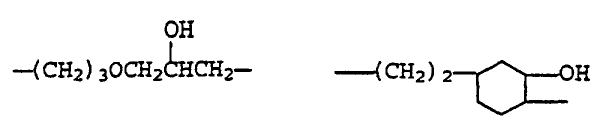

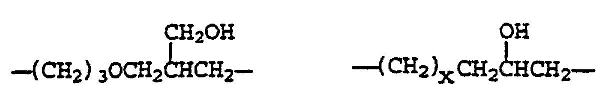

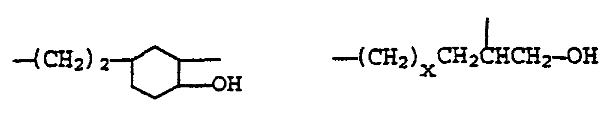

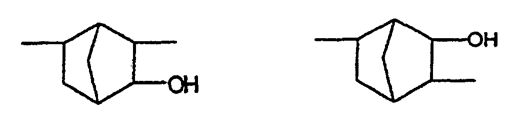

2. Polysiloxanes à fonction polyéther quaternaire selon la revendication 1, **caractérisés en ce que**
a va de 5 à 300,
b va de 0 à 20,
c va de 0 à 5 et
a+b+c ≥ 25.

3. Polysiloxanes à fonction polyéther quaternaire selon la revendication 1, **caractérisés en ce que** le radical polyéther de formule générale II représente des radicaux polyéther mixtes en séquence.

4. Polysiloxanes à fonction polyéther quaternaire selon l'une quelconque des revendications 1 à 3, **caractérisés en ce que** l'acide physiologiquement acceptable HA est choisi parmi l'acide acétique, les acides L-hydroxycarboxyliques et les acides carboxyliques aromatiques.
